(19) Europäisches Patentamt
European Patent Office
Office européen des brevets

(11) **EP 4 773 137 A1**

(12) **EUROPEAN PATENT APPLICATION**

(43) Date of publication:
08.07.2026 Bulletin 2026/28

(21) Application number: 25191547.6

(22) Date of filing: 24.07.2025

(51) International Patent Classification (IPC):
*G11B 27/031* (2006.01)     *G06T 7/20* (2017.01)
*G06T 13/40* (2011.01)     *G06N 3/08* (2023.01)

(52) Cooperative Patent Classification (CPC):
**G11B 27/031; G06N 3/08; G06T 7/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 03.01.2025 US 202519009648

(71) Applicant: **Lemon Inc.**
**Grand Cayman, KY1-1205 (KY)**

(72) Inventors:
• **Bai, Song**
**018960 Singapore (SG)**
• **Li, Haoxin**
**018960 Singapore (SG)**
• **Yu, Yingchen**
**018960 Singapore (SG)**

(74) Representative: **Grünecker Patent- und Rechtsanwälte**
**PartG mbB**
**Leopoldstraße 4**
**80802 München (DE)**

(54) **LEARNING TO ANIMATE IMAGES FROM A FEW VIDEOS TO PORTRAY DELICATE HUMAN ACTIONS**

(57)    There are provided methods, devices, and computer program products for video generation. A first video is converted into a second video to change the appearance of the first video. The first video comprises a first object that performs an action and the second video comprises the same object that performs the same action. A video generating model is determined based on the first and second videos. Specifically, A first feature is determined for the first video and a second feature is determined for the second video by the video generating model. A first motion portion in the first feature is determined for the first video based on a temporal change in the first video; the second feature is updated by aligning a second motion portion in the second feature with the first motion portion; the diffusion model is updated based on the first feature and the updated second feature.

*FIG. 1*

## Description

FIELD

The present disclosure generally relates to machine learning, and more specifically, to methods, devices and computer program products for video generation by a video generating model.

BACKGROUND

Despite substantial progress of video generation, video generative models still struggle to portray human actions from static images. Even strong artificial intelligence video generators encounter difficulty with this task. For example, some video generative models fail to animate actions such as balance beam jump or shooting a soccer ball from static images. This difficulty arises from the scarcity of training data that specifically depicts the target action. As human actions are diverse and likely follow a long-tailed distribution, many highly recognizable human actions, such as those of a niche sport like balance beam, suffer from limited training data. The data scarcity prevents video generative models from effectively learning such actions.

SUMMARY

In a first aspect of the present disclosure, there is provided a method for video generation, especially for animating a static image into a video. In the method, a first video is converted into a second video by augmentation. The first video comprises a first object that performs an action and the second video comprises the same object that performs the same action. The difference between the two videos relates to the scene and object appearance. A video generating model is determined based on the first video and the second video. The video generating model comprises the encoder, a diffusion model, and a decoder, and the video generating model represents an association relationship between an image, a prompt, and a video. The video comprises a plurality of images and comprises an object that performs an action. The action is specified in the prompt. A first feature is determined for the first video and a second feature is determined for the second video by the video generating model. A first motion portion is determined in the first feature for the first video based on a temporal change in the first video. The second feature is updated by aligning a second motion portion in the second feature with the first motion portion. The diffusion model is updated based on the first feature and the updated second feature.

In a second aspect of the present disclosure, there is provided an electronic device. The electronic device comprises: a computer processor coupled to a computer-readable memory unit, the memory unit comprising instructions that when executed by the computer processor implements a method according to the first aspect of the present disclosure.

In a third aspect of the present disclosure, there is provided a computer program product, the computer program product comprising a computer readable storage medium having program instructions embodied therewith, the program instructions executable by an electronic device to cause the electronic device to perform a method according to the first aspect of the present disclosure.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

BRIEF DESCRIPTION OF THE SEVERAL VIEWS OF THE DRAWINGS

Through the more detailed description of some implementations of the present disclosure in the accompanying drawings, the above and other objects, features and advantages of the present disclosure will become more apparent, wherein the same reference generally refers to the same components in the implementations of the present disclosure.

Fig. 1 illustrates a schematic diagram of an inference process of a video generating model;
Fig. 2 illustrates an example diagram of video generation according to implementations of the present disclosure;
Fig. 3 illustrates a schematic diagram of a framework of the video generating model according to implementations of the present disclosure;
Fig. 4 illustrates a schematic diagram of a process of motion feature alignment according to implementations of the present disclosure;
Fig. 5 illustrates a schematic diagram of a process of inter-frame correspondence relation alignment according to implementations of the present disclosure;
Fig. 6 illustrates a schematic diagram of a process of updating the decoder according to implementations of the present disclosure;

Figs. 7A to 7B illustrate the video generating model generating a video based on an input according to implementations of the present disclosure;

Fig. 8 illustrates an example flowchart of a method for video generation according to implementations of the present disclosure; and

Fig. 9 illustrates a block diagram of a computing device in which various implementations of the present disclosure can be implemented

DETAILED DESCRIPTION

Principle of the present disclosure will now be described with reference to some implementations. It is to be understood that these implementations are described only for the purpose of illustration and help those skilled in the art to understand and implement the present disclosure, without suggesting any limitation as to the scope of the disclosure. The disclosure described herein can be implemented in various manners other than the ones described below.

In the following description and claims, unless defined otherwise, all technical and scientific terms used herein have the same meaning as commonly understood by one of ordinary skills in the art to which this disclosure belongs.

References in the present disclosure to "one implementation," "an implementation," "an example implementation," and the like indicate that the implementation described may include a particular feature, structure, or characteristic, but it is not necessary that every implementation includes the particular feature, structure, or characteristic. Moreover, such phrases are not necessarily referring to the same implementation. Further, when a particular feature, structure, or characteristic is described in connection with an example implementation, it is submitted that it is within the knowledge of one skilled in the art to affect such feature, structure, or characteristic in connection with other implementations whether or not explicitly described.

It shall be understood that although the terms "first" and "second" etc. may be used herein to describe various elements, these elements should not be limited by these terms. These terms are only used to distinguish one element from another. For example, a first element could be termed a second element, and similarly, a second element could be termed a first element, without departing from the scope of example implementations. As used herein, the term "and/or" includes any and all combinations of one or more of the listed terms.

The terminology used herein is for the purpose of describing particular implementations only and is not intended to be limiting of example implementations. As used herein, the singular forms "a", "an" and "the" are intended to include the plural forms as well, unless the context clearly indicates otherwise. It will be further understood that the terms "comprises", "comprising", "has", "having", "includes" and/or "including", when used herein, specify the presence of stated features, elements, and/or components etc., but do not preclude the presence or addition of one or more other features, elements, components and/ or combinations thereof.

Principle of the present disclosure will now be described with reference to some implementations. It is to be understood that these implementations are described only for the purpose of illustration and help those skilled in the art to understand and implement the present disclosure, without suggesting any limitation as to the scope of the disclosure. The disclosure described herein can be implemented in various manners other than the ones described below. In the following description and claims, unless defined otherwise, all technical and scientific terms used herein have the same meaning as commonly understood by one of ordinary skills in the art to which this disclosure belongs.

It may be understood that data involved in the present technical solution (including but not limited to the data itself, the acquisition or use of the data) should comply with requirements of corresponding laws and regulations and relevant rules.

It may be understood that, before using the technical solutions disclosed in various implementation of the present disclosure, the user should be informed of the type, scope of use, and use scenario of the personal information involved in the present disclosure in an appropriate manner in accordance with relevant laws and regulations, and the user's authorization should be obtained.

For example, in response to receiving an active request from the user, prompt information is sent to the user to explicitly inform the user that the requested operation will need to acquire and use the user's personal information. Therefore, the user may independently choose, according to the prompt information, whether to provide the personal information to software or hardware such as electronic devices, applications, servers, or storage media that perform operations of the technical solutions of the present disclosure.

As an optional but non-limiting implementation, in response to receiving an active request from the user, the way of sending prompt information to the user, for example, may include a pop-up window, and the prompt information may be presented in the form of text in the pop-up window. In addition, the pop-up window may also carry a selection control for the user to choose "agree" or "disagree" to provide the personal information to the electronic device.

It may be understood that the above process of notifying and obtaining the user authorization is only illustrative and does not limit the implementation of the present disclosure. Other methods that satisfy relevant laws and regulations are also applicable to the implementation of the present disclosure.

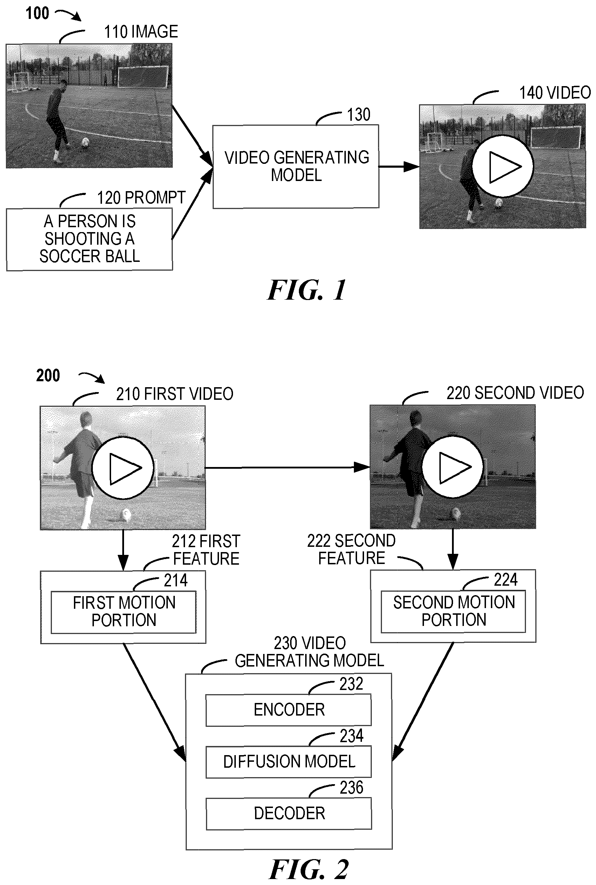

Fig. 1 illustrates a schematic diagram of an inference process 100 of a video generating model. As shown in Fig.1, the video generating model 130 may generate a video 140 based on an image 110 and a prompt 120. The video generating model 130 may portray human actions from static images (e.g., the image 110). In some examples, the image 110 may be the first frame of the video 140 and the prompt 120 may indicate that an object (e.g., a person) performs actions (e.g., shooting a soccer ball). As a result, the video 140 may indicate the object performing the actions specified in the prompt 120.

Existing image animation approaches encounter difficulties with the task of accurately portraying human actions from static images which is performed by the video generating model 130. These approaches typically rely on large video datasets for training the video generating model 130 and primarily focus on preserving the appearance of the reference images or on learning spatial-temporal conditioning controls to guide image animation. However, these approaches become impractical for the few-shot task. When limited to no more than tens of videos, these approaches suffer from severe overfitting and fail to learn generalizable motion patterns and object transformations. Some related works employ a two-path approach to customize motion from a few videos, but they require training for each reference image for animation, leading to limited flexibility. Although some related works attempt to learn appearance-irrelevant motion patterns from limited data, their models lack explicit supervision for appearance-general motion, which limits performance.

The main challenge of this few-shot task is learning generalizable motion patterns. The limited number of training videos makes it difficult to learn motion patterns that generalize to diverse appearance. Furthermore, the reference image adds an extra condition, requiring the motion to align with the spatial arrangement of humans or objects in the image to maintain smooth transitions. The few-shot learning of motion conditioned on a user-provided reference image is more challenging.

In some related works, video generation using diffusion has surpassed methods based on generative adversarial networks (GANs), variational autoencoders (VAEs) and flow techniques. Diffusion models for video generation may be broadly classified into two groups. The first group generates videos purely from textual descriptions. These methods extend advanced text-to-image generative models by integrating 3D convolutions, 3D UNets, and temporal attention modules to capture temporal dynamics in videos. To mitigate concept forgetting when training on low-quality videos, some approaches use both videos and images jointly for training. Language models (LMs) contribute by generating frame descriptions and scene graphs to guide the video generation. Trained by large-scale video-text datasets, these methods excel at producing high-fidelity videos. However, they typically lack control over specific frame layouts, such as object positions and human poses. To improve controllability, LMs are used to predict control signals, but these signals typically offer coarse control (e.g., bounding boxes) rather than fine-grained control (e.g., detailed human motion or object deformation).

On top of textual descriptions, the second group of techniques benefit from additional guidance sequences, such as depth maps, motion vectors, optical flows, and bounding boxes, which help control motion and frame layouts. Additionally, several techniques use existing videos as guidance to generate videos with different appearances but identical motion patterns. However, these methods cannot create novel videos that share the same motion class with the guidance video but differ in the actual motion, such as human positions and viewing angles, which limits their generative flexibility.

In some related works, image animation involves generating videos that begin with a given reference image. Common approaches achieve this by integrating the image features into videos through cross-attention layers, employing additional image encoders, or incorporating the reference image into noised videos. Another line of approaches focuses on learning structural guidance (e.g., motion maps) that aligns with the reference image to guide the generation of subsequent frames. However, these approaches often require extensive training videos to effectively learn motion or structure guidance. Some related works employ a temporal path to learn motion patterns from a few videos and a spatial path to learn appearance from a reference image for animation. However, they require training for each reference image, which limits their adaptability. Some related works propose to learn specific motion patterns from a few videos, they primarily use the reference image as an appearance condition and rely on the model to automatically prioritize motion over appearance. Without explicit supervision for appearance-general motion, their generalizability is still limited.

In view of the above, the present disclosure proposes a solution for video generation with reference to Fig. 2, which illustrates an example diagram 200 of video generation according to implementations of the present disclosure. As illustrated in Fig. 2, a first video 210 (also referred to as an original video) is converted into a second video 220 (also referred to as an augmented video). For example, the conversion may be implemented through strong augmentation changing the appearance of the first video. The first video 210 comprises a first object that performs an action, and the second video 220 comprises the same object that performs the same action. The video generating model 230 comprises the encoder 232, a diffusion model 234, and a decoder 236. The video generating model 230 represents an association relationship between an image, a prompt, and a video. The video comprises a plurality of images and comprises an object that performs an action. The action is specified in the prompt. A video generating model 230 is determined based on the first video 210 and the second video 220. In determining the video generating model 230, a first feature 212 for the first video 210 and a second feature 222 for the second video 220 are determined by the video generating model 230, respectively. A first motion portion 214 in the first feature 212 for the first video 210 is determined based on a temporal change in the first video 210. The second feature 222 is updated by aligning a second motion portion 224 in the second feature 222 with the first motion portion 214. The diffusion model 234 is updated based on the first feature 212 and the updated second feature.

With these implementations of the present disclosure, two videos using two aligned motion signals are used to determine the video generating model. The video generating model may be encouraged to learn motion patterns that can generalize across different appearances. In this way, overfitting to the appearance in the limited training data may be reduced.

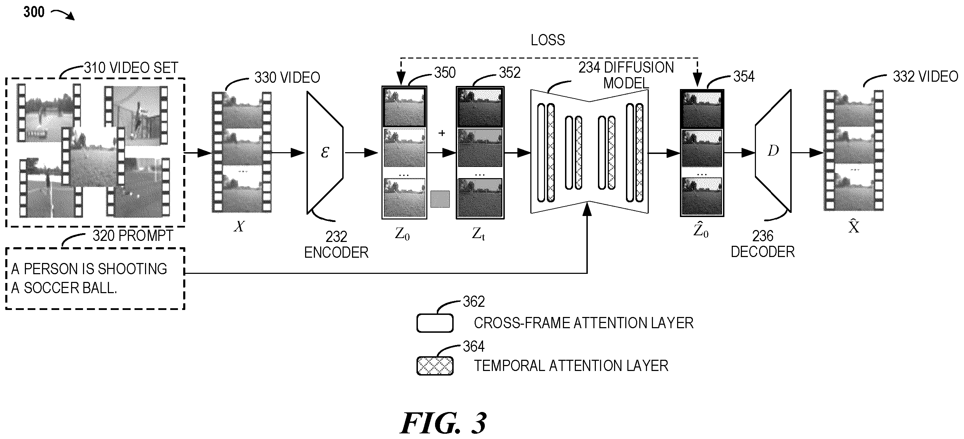

The following will describe the process of determining the video generating model 230 with reference to Fig. 3, which illustrates a schematic diagram of a framework 300 of the video generating model 230 according to implementations of the present disclosure. As shown in Fig. 3, a latent diffusion model (LDM) may be used as an example of the video generating model 230, which comprises four main components: an image encoder 232 (denoted as $\mathcal{E}$), a diffusion model 234 (denoted as $\epsilon_\theta$), an image decoder 236 (denoted as $\mathcal{D}$) and a text encoder (denoted as $\mathcal{T}$). During training, an image $x \in \mathbb{R}^{H \times W \times 3}$ may be first encoded, by the encoder 232, into a latent image $z_0 = \mathcal{E}(x) \in \mathbb{R}^{h \times w \times c}$ where $h$, $w$ and $c$ denote the height, width and number of channels of the latent image, respectively. Next, $z_0$ undergoes a pre-defined diffusion process to add noise, resulting in $z_t = \sqrt{\bar{\alpha}_t} z_0 + \sqrt{1 - \bar{\alpha}_t} \epsilon_t$, where $\epsilon_t \sim \mathcal{N}(0, I)$, $t \in [0, T]$ denotes the noising step, and $\bar{\alpha}_t$ represents the noise strength. During inference, a latent noise $z_T$ is drawn $\mathcal{N}(0, I)$ and progressively denoised into $\hat{z}_0$. Finally, the decoder 236 reconstructs the generated image $\hat{x} = \mathcal{D}(\hat{z}_0)$.

The LDM framework may be extended to generate videos. A video 330 (as an example of the first video 210 or the second video 220, denoted as X) may be sampled from a video set 310 (also referred to as a training dataset). The video 330 may include a plurality of frames x (also called as images), which is denoted as $X = \langle x^i \rangle_{i=1}^N$. Each frame is encoded into a latent frame $z_0^i = \mathcal{E}(x^i) \in \mathbb{R}^{h \times w \times c}$. Collectively, all latent frames 350 $Z_0 = \langle z_0^i \rangle_{i=1}^N \in \mathbb{R}^{N \times h \times w \times c}$ form a latent video used in the noising and denoising processes. All latent frames being added noises 352 may be denoted as $Z_t$ which may be denoised into $\hat{Z}_0$ 354. The decoder 236 may decode $\hat{Z}_0$ 354 to generate a reconstructed video 332 (denoted as $\hat{X}$). The training loss between $Z_0$ and $\hat{Z}_0$ may be defined as follows:

$$\mathcal{L}_D = \mathbb{E}_{X, \epsilon_t \sim \mathcal{N}(0, I), t, y}\left[\left\|\epsilon_t - \epsilon_\theta\big(Z_t, t, \mathcal{T}(y)\big)\right\|_2^2\right] \qquad (1)$$

In Eq. (1), y represents a text prompt 320 associated with the video 330. To capture temporal dynamics in videos, temporal attention layers 364 may be integrated into the diffusion model 234. To enhance temporal consistency between frames, the self-attention layers in the diffusion model 234 may be replaced with cross-frame attention layers 362, in which features from the first frame (the reference frame) are used as the key and value, enabling the appearance of the first frame to be propagated to subsequent frames. In image animation tasks, the noise-free reference image may be integrated into the input of the diffusion model 234 to help preserve the appearance of the reference image.

In some implementations, the video generating model 230 may include a motion alignment module which directs the video generating model 230 to learn motion that generalizes across various appearances. To achieve this, the video generating model 230 may be forced to learn consistent motion patterns from a pair of videos (e.g., a pair of the first video 210 and the second video 220) with identical motion but different appearances, created using data augmentation. Two motion signals may be aligned in the diffusion model 234 between the video pairs and requires the video generating model 230 to predict both videos using the shared motion signals. In this way, overfitting to specific appearances in limited training samples may be reduced and generalizability of learned motion patterns may be improved.

In implementations of the present disclosure, a plurality of first images that are comprised in the first video 210 may be converted into a plurality of second images by changing appearance of the plurality of first images, respectively. From the original video (i.e., the first video 210, denoted as $X^{ori}$), an augmented version (i.e., the second video 220, denoted as $X^{aug}$) may be created, which has different appearances but the same motion information. In some examples, Gaussian blur with random kernel sizes and random color adjustments may be applied to the plurality of first images to generate the plurality of second images. The overall loss is diffusion noise prediction, aimed to recover the two videos, which is represented as follows:

$$\mathcal{L}_D = \mathbb{E}_{X^{ori}, X^{aug}, \epsilon_t^{ori}, \epsilon_t^{aug}, t, y}\left[\left\|\epsilon_t^{ori} - \epsilon_\theta\left(Z_t^{ori}, t, \mathcal{T}(y)\right)\right\|_2^2 + \left\|\epsilon_t^{aug} - \epsilon_\theta\left(Z_t^{aug}, t, \mathcal{T}(y)\right)\right\|_2^2\right] \qquad (2)$$

For simplicity, the superscripts ori and aug are omitted in the subsequent operations when the same operation is applied to both videos.

After the plurality of second images are generated, the second video 220 may be determined based on the plurality of second images. With these implementations, the first video 210 may be converted into a plurality of second videos 220 and a plurality of pairs including the first video 210 and the second video 220 may be used to determine the video generating model 230. In this way, a plurality of second videos may be obtained based on the first video and the need for extensive video data collection may be reduced.

In implementations of the present disclosure, the temporal change in the first video 210 may be determined based on a difference between the first feature 212 and a mean associated with the first feature 212. The first motion portion 214 may be determined based on the temporal change and a deviation associated with the first feature 212. In some examples, the mean may indicate static features (e.g., appearance) of the first video 210.

In implementations of the present disclosure, the first motion portion 214 may be determined by normalizing the temporal change with the deviation associated with the first feature 212. The purpose of motion feature alignment is to force the video generating model 230 to learn the same motion features from the videos before and after the augmentation, which distorts appearance but not motion. The video generating model 230 may be required to recover the augmented video from motion features of the original video and the appearance features of the augmented video. This encourages learning of consistent motion features from both videos. The features (e.g., the first feature 212) extracted after a temporal attention layer 364 may be denoted as $F_{in} \in \mathbb{R}^{N \times h' \times w' \times c'}$. Because motion is represented by the temporal changes of the features, the static components may be removed from $F_{in}$ and it may be normalized to obtain the dynamic features as follows:

$$\hat{F}_{\text{in}} = \frac{F_{\text{in}} - \mu_{\text{T}}(F_{\text{in}})}{\sigma_{\text{T}}(F_{\text{in}})} \qquad (3)$$

In Eq. (3), $\mu_{\text{T}} \in \mathbb{R}^{h' \times w' \times c'}$ and $\sigma_{\text{T}} \in \mathbb{R}^{h' \times w' \times c'}$ represent the mean and standard deviation of $F_{in}$ calculated along the temporal dimension. $F_{\text{in}}$ represents the first feature 212 and $\hat{F}_{\text{in}}$ represents the first motion portion 214. The standard deviation serves as a normalization factor to reduce the influence of feature scales (e.g., varying brightness in videos). As a result, $\hat{F}_{\text{in}}$ becomes independent of static appearance elements and is focused on the changes within the video. In this way, the impact of static features may be removed and the video generating model 230 may mainly focus on motion information of videos, thereby improving the performance of animating an object performing an action.

In implementations of the present disclosure, the first motion portion 214 may comprise a plurality of channels. At least one channel (also referred to as a motion channel) may be selected from the plurality of channels based on a strength of motion information related to the plurality of channels. In some examples, motion information may be predominantly encoded in a few channels and the channels may be identified with rich motion information. The motion information may be quantified using the standard deviations along the temporal dimension in each channel, which are then averaged across all spatial positions, and the result is denoted as $s \in \mathbb{R}^{c'}$. Channels whose value (as an example of the strength of motion information) in s exceed the $\mathcal{T}$ - percentile (e.g., 5% or 10% or another value) may be identified as motion channels and denoted as the set $\mathcal{C}^m$. The motion features are thus represented as $\hat{F}_{\text{in}}[c], \forall c \in \mathcal{C}^m$. The motion features of the original video may be denoted as $\hat{F}_{\text{in}}^{ori}[c]$ and those of the augmented video may be denoted as $\hat{F}_{\text{in}}^{aug}[c]$.

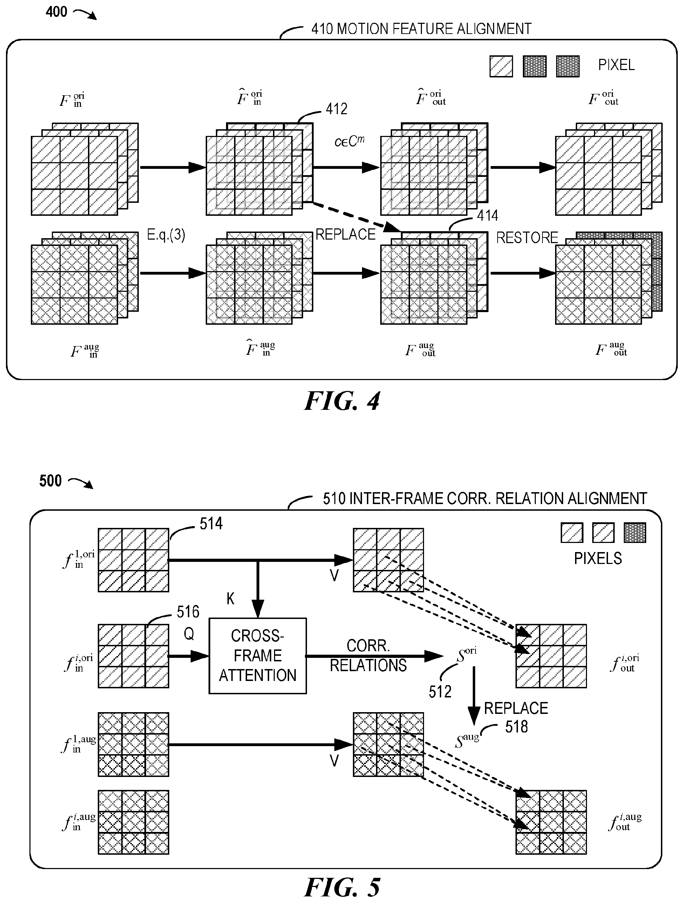

After the motion channel(s) is selected, the second motion portion 224 in the second feature 222 may be updated based on the at least one channel in the first motion portion 214. The following will describe the process of updating the second motion portion 224 with reference to Fig. 4, which illustrates a schematic diagram 400 of a process of motion feature alignment 410 according to implementations of the present disclosure. The motion feature alignment may be operated in the temporal attention layer 364 in the diffusion model. As shown in Fig. 4, at least one channel 412 in the first motion portion 214 may be selected based on the strength of motion information. The corresponding channel 414 in the second motion portion 224 may be replaced with the at least one channel 412 to update the second motion portion 224. Updating the second motion portion 224 based on the at least one channel may be represented as follows:

$$\hat{F}_{\text{out}}^{aug}[c] \leftarrow \hat{F}_{in}^{ori}[c], \quad \forall c \in \mathcal{C}_m \qquad (4)$$

In this way, the strong motion features may be aligned without losing subtle motion features, and thus the accuracy of identifying small movements can be improved.

In implementations of the present disclosure, the diffusion model 234 may comprise a plurality of temporal attention layers 364. The first feature 212 may comprise a first output feature at a temporal attention layer in the plurality of temporal attention layers 364. The second feature 222 may comprise a second output feature at the temporal attention layer. The first output feature may be restored based on the first output feature, a mean and a deviation associated with the first output feature, which is represented by $F_{\text{out}}^{\text{aug}} = \hat{F}_{\text{out}}^{\text{aug}} \sigma_{\text{T}}^{\text{aug}} + \mu_{\text{T}}^{\text{aug}}$. The second output feature may be restored based on the second output feature, a mean and a deviation associated with the second output feature, which is represented by $F_{\text{out}}^{\text{aug}} = \hat{F}_{\text{out}}^{\text{aug}} \sigma_{\text{T}}^{\text{aug}} + \mu_{\text{T}}^{\text{aug}}$.

After the first output feature and the second output feature are restored, the diffusion model 234 may be updated based on the first and second restored output features. In some examples, the first and second restored output features may be used in noise prediction $\varepsilon_\theta$ as shown in Eq. (2). By minimizing the loss in Eq. (2), parameters of the diffusion model 234 may be updated.

The following will describe the process of cross-frame correspondence relation alignment 510 in the cross-frame attention layer 362 with reference to Fig. 5 according to implementations of the present disclosure. As shown in Fig. 5, a first spatial portion 512 indicating a first cross-frame correspondence relation in the first video 512 may be determined based on a difference between a first image (corresponding to input feature 514) in the first video 210 and at least one subsequent image (corresponding to input feature 516) that follows the first image in the first video 210. The second feature 222 may be updated by replacing a second spatial portion indicating a cross-frame correspondence relation 518 in the second video with the first cross-frame correspondence relation 512. In some examples, the cross-frame attention layer 362 may be used to learn the same cross-frame motion between the original and augmented videos. From the attention weights of the original video, spatial correspondence between the first frame and later frames is identified. The reconstruction of the augmented video may be required to adopt the same spatial correspondence. This forces the diffusion model 234 to learn the same warping strategy for both videos. Since the video pairs have the same motion but different appearance, the learned warping strategy becomes motion-sensitive and appearance-invariant. The input features of the cross-frame attention layer 362 are denoted as $F_{in} = \langle f_{in}^i \rangle_{i=1}^N \in \mathbb{R}^{N \times h' \times w' \times c'}$. The output features may be computed as follows:

$$F_{\text{out}} = \text{CFA}(Q, K, V) = \text{Softmax}\left(\frac{(QW^Q)(KW^K)^\top}{\sqrt{c}}\right)(VW^V) = S(VW^V) \tag{5}$$

In Eq. (5), $Q = F_{in}$, $K = f_{in}^1$, $V = f_{in}^1$ represent the query, key, and value, respectively. $W^Q$, $W^K$ and $W^V$ represent the learnable projection matrices. Unlike self-attention layers, the key and value here are from the first frame of the video provided by the user. Therefore, S indicates the similarity between the query and the key from the first frame, which implicitly warps the first frame into subsequent frames. Therefore, S may be interpreted as correspondence relations between spatial locations of the first frame and those of the current frame, capturing cross-frame motion. The inter-frame correspondence relations of the original video (also referred to as the first spatial portion) and the augmented video (also referred to as the second spatial portion) may be denoted as $S^{ori}$ and $S^{aug}$. $S^{aug}$ may be replaced with $S^{ori}$ in the network processing the augmented video. Effectively, this amounts to using $S^{ori}$ to warp the features of the first frame of the augmented video to produce outputs $F_{out}^{aug}$, which the video generating model 230 uses to reconstruct the augmented video. This operation enforces shared cross-frame correspondence relations (which indicate cross-frame motion) between the two videos. Without learning the shared correspondence relations, the video generating model 230 cannot predict both videos.

In implementations of the present disclosure, the diffusion model 234 may further comprise a plurality of cross-frame attention layers 364. The plurality of temporal attention layers 362 and the plurality of cross-frame attention layers 364 may be interlaced. The first spatial portion may be determined at a cross-frame attention layer in the plurality of cross-frame attention layers 364. In some examples, the number of the temporal attention layers 362 may be the same as the number of cross-frame attention layers 364. Although a cross-frame attention layer is set before a temporal attention layer in the diffusion model 234 as shown in Fig. 3, the temporal attention layer may be set before the cross-frame attention layer. It is to be noted that layers in the conventional diffusion model are not shown in Fig. 3 and only newly added layers (i.e., the plurality of temporal attention layers 362 and the plurality of cross-frame attention layers 364) are shown in Fig. 3.

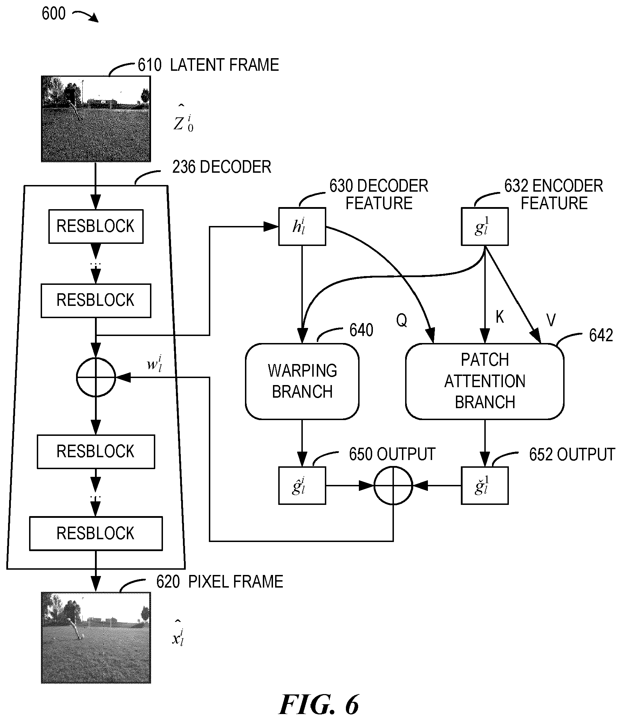

In LDM, pixel-level details may be distorted when videos are decoded from the latent space, as even minor perturbations within the latent space may lead to noticeable visual artifacts, compromising the intricate details of human actors and smooth transitions. To mitigate this issue, the decoder 236 may be devised with additional layers to propagate multi-scale details from the reference image to the generated frames. The following will describe the structure of the decoder 236 with reference to Fig. 6, which illustrates a schematic diagram of a process 600 of updating the decoder 236 according to implementations of the present disclosure. As shown in Fig. 6, the decoder 236 may include a plurality of residual blocks. The decoder 236 may generate a pixel frame 620 by processing a latent frame 610. An encoder feature 632 may be obtained based on the encoder 232 and a decoder feature 630 may be obtained based on an output of the diffusion model 234. The decoder 236 may be updated based on the encoder feature 632 and the decoder feature 630.

In implementations of the present disclosure, the encoder 232 may comprise a plurality of encoder layers and the encoder feature 632 may comprise a plurality of encoder features corresponding to the plurality of encoder layers. The decoder 236 may comprise a plurality of decoder layers and the decoder feature 630 may comprise a plurality of decoder features corresponding to the plurality of decoder layers. A decoder layer in the plurality of decoder layers may be updated based on an encoder feature corresponding to the decoder layer and a decoder feature corresponding to the decoder layer. Since the motion between the reference image and generated frame can range from small to large displacements, two branches (i.e., a warping branch 640 and a patch attention branch 642) may be introduced to handle both short- range and long-range motion. The levels (or layers) of both the encoder and decoder may be defined as $l \in \{0, 1, ..., L\}$, with $l = 0$ representing the pixel space and $l = L$ representing the latent space. At level $l$, the decoder feature 630 of the i-th decoding frame, denoted as hj, and the encoder feature 632 of the reference image, denoted as $g_l^1$ may be extracted. $g_l^1$ may be then propagated to enhance the details in $h_l^i$ through the warping branch 640 and the patch attention branch 642. The warping branch 640 retrieves details from nearby areas in $g_l^1$ for each spatial position in $h_l^i$. It learns the displacements between the two features and warps $g_l^1$ into the output 650 (denoted as $\hat{g}_l^1$) based on these displacements. The patch attention branch 642 retrieves details from the global scope of $g_l^1$, complementing the local retrieval of the warping branch. It employs an attention layer with $h_l^i$ as the query and $g_l^1$ as the key and value to produce the output 652 (denoted as $\breve{g}_l^1$). The two outputs may be fused using learnable weights

$$\tilde{h}_l^i = h_l^i + w_l^i \odot (\hat{g}_l^1 + \breve{g}_l^1)$$

, where $w_l^i$ represents the learnable weights and Q represents element-wise multiplication. The fused features $\tilde{h}_l^i$ may be then passed to the next level. In this way, through detail propagation at each level for each decoding frame, the details in the generated videos are enhanced.

In some implementations, the decode 236 may be trained to retrieve proper details through reconstructing distorted videos to their ground-truth versions. $g_l^1$ may be first extracted from the first frame of a training video. Next, the video may be distorted, and it may be encoded into a latent video. The decoder 236 may be then trained to reconstruct the ground-truth video using this distorted latent video. This approach encourages the decoder to retrieve relevant details from the first frame.

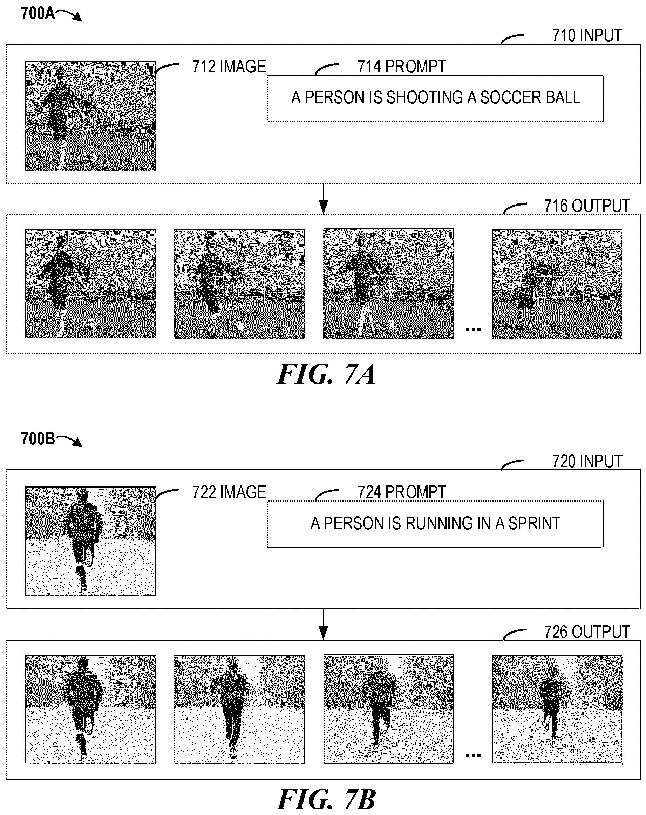

After the video generating model 230 is trained, the video generating model 230 may be used to generate video. In implementations of the present disclosure, a target image and a target prompt may be input into the video generating model 230. The target prompt instructs the video generating model 230 to generate a target video that comprises a target object performing a target action, and the target action being specified in the target prompt. Then, the target video may be received from the video generating model 230. The following will introduce the process of generating a video by the video generating model 230 with reference to Figs. 7A to 7B, which illustrate the video generating model 230 generating a video based on an input according to implementations of the present disclosure. As shown in Fig. 7A, the video generating model 230 may generate an output 716 based on an input 710 including an image 712 and a prompt 714. The prompt 714 may instruct the video generating model 230 to generate a video (as an example of the output 716) which includes a person shooting a soccer ball. The image 712 may be the first frame of the output 716. As shown in Fig. 7B, the video generating model 230 may generate an output 726 based on input 720 including an image 722 and a prompt 724. The prompt 724 may instruct the video generating model 230 to generate a video (as an example of the output 726) which includes a person running in a sprint. The image 712 may be the first frame of the output 716.

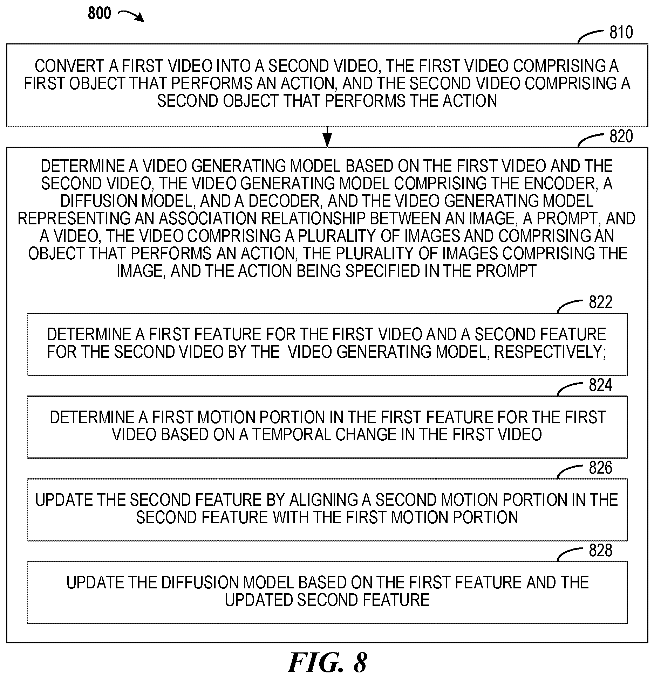

The above paragraphs have described details for video generation. According to implementations of the present disclosure, a method is provided for video generation. Reference will be made to Fig. 8 for more details about the method, where Fig. 8 illustrates an example flowchart of a method 800 for video generation according to implementations of the present disclosure. At block 810, a first video is converted into a second video. The first video comprises a first object that performs an action and the second video comprises the same object that performs the same action. At block 820, a video generating model is determined based on the first video and the second video. The video generating model comprises the encoder, a diffusion model, and a decoder, and the video generating model represents an association relationship between an image, a prompt, and a video. The video comprises a plurality of images and comprises an object that performs an action. The action is specified in the prompt. At block 822, a first feature is determined for the first video and a second feature is determined for the second video by the video generating model, respectively. At block 824, a first motion portion is determined in the first feature for the first video based on a temporal change in the first video. At block 826, the second feature is updated by aligning a second motion portion in the second feature with the first motion portion. At block 828, the diffusion model is updated based on the first feature and the updated second feature.

In implementations of the present disclosure, determining the first motion portion in the first feature comprises: determining the temporal change in the first video based on a difference between the first feature and a mean associated with the first feature; and determining the first motion portion based on the temporal change and a deviation associated with the first feature.

In implementations of the present disclosure, determining the first motion portion based on the temporal change and the deviation associated with the first feature comprises: determining the first motion portion by normalizing the temporal change with the deviation associated with the first feature.

In implementations of the present disclosure, the first motion portion comprises a plurality of channels, and updating the second feature by aligning the second motion portion in the second feature with the first motion portion comprises: selecting at least one channel from the plurality of channels based on a strength of motion information related to the plurality of channels; and updating the second motion portion in the second feature based on the at least one channel in the first motion portion.

In implementations of the present disclosure, the diffusion model comprises a plurality of temporal attention layers, the first feature comprises a first output feature at a temporal attention layer in the plurality of temporal attention layers, the second feature comprises a second output feature at the temporal attention layer, and updating the diffusion model comprises: restoring the first output feature based on the first output feature, a mean and a deviation associated with the first output feature; restoring the second output feature based on the second output feature, a mean and a deviation associated with the second output feature; and updating the diffusion model based on the first and second restored output features.

In implementations of the present disclosure, the method 800 further comprises determining a first spatial portion indicating a cross-frame correspondence relation in the first video based on a difference between a first image in the first video and at least one subsequent image that follows the first image in the first video; and updating the second feature by replacing a second spatial portion in the second feature with the first spatial portion.

In implementations of the present disclosure, the diffusion model further comprises a plurality of cross-frame attention layers, the plurality of temporal attention layers and the plurality of cross-frame attention layers are interlaced, and the first spatial portion is determined at a cross-frame attention layer in the plurality of cross-frame attention layers.

In implementations of the present disclosure, determining the video generating model further comprises: obtaining an encoder feature based on the encoder; obtaining a decoder feature based on an output of the diffusion model; and updating the decoder based on the encoder feature and the decoder feature.

In implementations of the present disclosure, the encoder comprises a plurality of encoder layers and the encoder feature comprises a plurality of encoder features corresponding to the plurality of encoder layers, the decoder comprises a plurality of decoder layers and the decoder feature comprises a plurality of decoder features corresponding to the plurality of decoder layers, and updating the decoder comprises: updating a decoder layer in the plurality of decoder layers based on an encoder feature corresponding to the decoder layer and a decoder feature corresponding to the decoder layer.

In implementations of the present disclosure, converting the first video into the second video comprises: converting a plurality of first images that are comprised in the first video into a plurality of second images by changing appearance of the plurality of first images, respectively; and determining the second video based on the plurality of second images.

In implementations of the present disclosure, the method 800 further comprises inputting a target image and a target prompt into the video generating model, the target prompt instructing the video generating model to generate a target video that comprises a target object performing a target action, and the target action being specified in the target prompt; and receiving the target video from the video generating model.

According to implementations of the present disclosure, an apparatus is provided for video generation. The apparatus comprises: a converting module configured to convert a first video into a second video, the first video comprising a first object that performs an action, and the second video comprising a second object that performs the action; and a video generating model determining module configured to determine a video generating model based on the first video and the second video, the video generating model comprising the encoder, a diffusion model, and a decoder, and the video generating model representing an association relationship between an image, a prompt, and a video, the video comprising a plurality of images and comprising an object that performs an action, the plurality of images comprising the image, and the action being specified in the prompt, the video generating model determining comprising: a feature determining module configured to determine a first feature for the first video and a second feature for the second video by the video generating model, respectively; a motion determining module configured to determine a first motion portion in the first feature for the first video based on a temporal change in the first video; a feature updating model configured to update the second feature by aligning a second motion portion in the second feature with the first motion portion; and a model updating module configured to update the diffusion model based on the first feature and the updated second feature.

According to implementations of the present disclosure, an electronic device is provided for implementing the method 800. The electronic device comprises: a computer processor coupled to a computer-readable memory unit, the memory unit comprising instructions that when executed by the computer processor implements a method for video generation. The method comprises: converting a first video into a second video, the first video comprising a first object that performs an action, and the second video comprising a second object that performs the action; determining a video generating model based on the first video and the second video, the video generating model comprising the encoder, a diffusion model, and a decoder, and the video generating model representing an association relationship between an image, a prompt, and a video, the video comprising a plurality of images and comprising an object that performs an action, the plurality of images comprising the image, and the action being specified in the prompt. Specifically, determining the video generating model comprising: determining a first feature for the first video and a second feature for the second video by an encoder, respectively; determining a first motion portion in the first feature for the first video based on a temporal change in the first video; updating the second feature by aligning a second motion portion in the second feature with the first motion portion; and updating the diffusion model based on the first feature and the updated second feature.

In implementations of the present disclosure, determining the first motion portion in the first feature comprises: determining the temporal change in the first video based on a difference between the first feature and a mean associated with the first feature; and determining the first motion portion based on the temporal change and a deviation associated with the first feature.

In implementations of the present disclosure, determining the first motion portion based on the temporal change and the deviation associated with the first feature comprises: determining the first motion portion by normalizing the temporal change with the deviation associated with the first feature.

In implementations of the present disclosure, the first motion portion comprises a plurality of channels, and updating the second feature by aligning the second motion portion in the second feature with the first motion portion comprises: selecting at least one channel from the plurality of channels based on a strength of motion information related to the plurality of channels; and updating the second motion portion in the second feature based on the at least one channel in the first motion portion.

In implementations of the present disclosure, the diffusion model comprises a plurality of temporal attention layers, the first feature comprises a first output feature at a temporal attention layer in the plurality of temporal attention layers, the second feature comprises a second output feature at the temporal attention layer, and updating the diffusion model comprises: restoring the first output feature based on the first output feature, a mean and a deviation associated with the first output feature; restoring the second output feature based on the second output feature, a mean and a deviation associated with the second output feature; and updating the diffusion model based on the first and second restored output features.

In implementations of the present disclosure, the method 800 further comprises determining a first spatial portion indicating a cross-frame correspondence relation in the first video based on a difference between a first image in the first video and at least one subsequent image that follows the first image in the first video; and updating the second feature by replacing a second spatial portion in the second feature with the first spatial portion.

In implementations of the present disclosure, the diffusion model further comprises a plurality of cross-frame attention layers, the plurality of temporal attention layers and the plurality of cross-frame attention layers are interlaced, and the first spatial portion is determined at a cross-frame attention layer in the plurality of cross-frame attention layers.

In implementations of the present disclosure, determining the video generating model further comprises: obtaining an encoder feature based on the encoder; obtaining a decoder feature based on an output of the diffusion model; and updating the decoder based on the encoder feature and the decoder feature.

In implementations of the present disclosure, the encoder comprises a plurality of encoder layers and the encoder feature comprises a plurality of encoder features corresponding to the plurality of encoder layers, the decoder comprises a plurality of decoder layers and the decoder feature comprises a plurality of decoder features corresponding to the plurality of decoder layers, and updating the decoder comprises: updating a decoder layer in the plurality of decoder layers based on an encoder feature corresponding to the decoder layer and a decoder feature corresponding to the decoder layer.

In implementations of the present disclosure, converting the first video into the second video comprises: converting a plurality of first images that are comprised in the first video into a plurality of second images by changing appearance of the plurality of first images, respectively; and determining the second video based on the plurality of second images.

In implementations of the present disclosure, the method 800 further comprises inputting a target image and a target prompt into the video generating model, the target prompt instructing the video generating model to generate a target video that comprises a target object performing a target action, and the target action being specified in the target prompt; and receiving the target video from the video generating model.

According to implementations of the present disclosure, a non-transitory computer program product is provided, the non-transitory computer program product comprising a non-transitory computer readable storage medium having program instructions embodied therewith, the program instructions executable by an electronic device to cause the electronic device to perform the method 800.

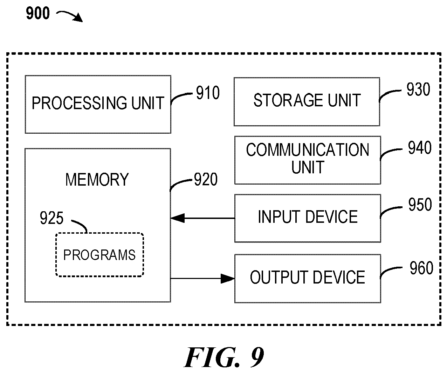

Fig. 9 illustrates a block diagram of a computing device 900 in which various implementations of the present disclosure can be implemented. It would be appreciated that the computing device 900 shown in Fig. 9 is merely for purpose of illustration, without suggesting any limitation to the functions and scopes of the present disclosure in any manner. The computing device 900 may be used to implement the above method 700 in implementations of the present disclosure. As shown in Fig. 9, the computing device 900 may be a general-purpose computing device. The computing device 900 may at least comprise one or more processors or processing units 910, a memory 920, a storage unit 930, one or more communication units 940, one or more input devices 950, and one or more output devices 960.

The processing unit 910 may be a physical or virtual processor and can implement various processes based on programs 925 stored in the memory 920. In a multi-processor system, multiple processing units execute computer executable instructions in parallel so as to improve the parallel processing capability of the computing device 900. The processing unit 910 may also be referred to as a central processing unit (CPU), a microprocessor, a controller, or a microcontroller.

The computing device 900 typically includes various computer storage medium. Such medium can be any medium accessible by the computing device 900, including, but not limited to, volatile and non-volatile medium, or detachable and non-detachable medium. The memory 920 can be a volatile memory (for example, a register, cache, Random Access Memory (RAM)), a non-volatile memory (such as a Read-Only Memory (ROM), Electrically Erasable Programmable Read-Only Memory (EEPROM), or a flash memory), or any combination thereof. The storage unit 930 may be any detachable or non-detachable medium and may include a machine-readable medium such as a memory, flash memory drive, magnetic disk, or another other media, which can be used for storing information and/or data and can be accessed in the computing device 900.

The computing device 900 may further include additional detachable/ non-detachable, volatile/non-volatile memory medium. Although not shown in Fig. 9, it is possible to provide a magnetic disk drive for reading from and/or writing into a detachable and non-volatile magnetic disk and an optical disk drive for reading from and/or writing into a detachable non-volatile optical disk. In such cases, each drive may be connected to a bus (not shown) via one or more data medium interfaces.

The communication unit 940 communicates with a further computing device via the communication medium. In addition, the functions of the components in the computing device 900 can be implemented by a single computing cluster or multiple computing machines that can communicate via communication connections. Therefore, the computing device 900 can operate in a networked environment using a logical connection with one or more other servers, networked personal computers (PCs) or further general network nodes.

The input device 950 may be one or more of a variety of input devices, such as a mouse, keyboard, tracking ball, voice-input device, and the like. The output device 960 may be one or more of a variety of output devices, such as a display, loudspeaker, printer, and the like. By means of the communication unit 940, the computing device 900 can further communicate with one or more external devices (not shown) such as the storage devices and display device, with one or more devices enabling the user to interact with the computing device 900, or any devices (such as a network card, a modem, and the like) enabling the computing device 900 to communicate with one or more other computing devices, if required. Such communication can be performed via input/output (I/O) interfaces (not shown).

In some implementations, instead of being integrated in a single device, some, or all components of the computing device 900 may also be arranged in cloud computing architecture. In the cloud computing architecture, the components may be provided remotely and work together to implement the functionalities described in the present disclosure. In some implementations, cloud computing provides computing, software, data access and storage service, which will not require end users to be aware of the physical locations or configurations of the systems or hardware providing these services. In various implementations, the cloud computing provides the services via a wide area network (such as Internet) using suitable protocols. For example, a cloud computing provider provides applications over the wide area network, which can be accessed through a web browser or any other computing components. The software or components of the cloud computing architecture and corresponding data may be stored on a server at a remote position. The computing resources in the cloud computing environment may be merged or distributed at locations in a remote data center. Cloud computing infrastructures may provide the services through a shared data center, though they behave as a single access point for the users. Therefore, the cloud computing architectures may be used to provide the components and functionalities described herein from a service provider at a remote location. Alternatively, they may be provided from a conventional server or installed directly or otherwise on a client device.

The functionalities described herein can be performed, at least in part, by one or more hardware logic components. For example, and without limitation, illustrative types of hardware logic components that can be used include Field-Programmable Gate Arrays (FPGAs), Application-specific Integrated Circuits (ASICs), Application-specific Standard Products (ASSPs), System-on-a-chip systems (SOCs), Complex Programmable Logic Devices (CPLDs), and the like.

Program code for carrying out the methods of the subject matter described herein may be written in any combination of one or more programming languages. The program code may be provided to a processor or controller of a general-purpose computer, special purpose computer, or other programmable data processing apparatus such that the program code, when executed by the processor or controller, causes the functions/operations specified in the flowcharts and/or block diagrams to be implemented. The program code may be executed entirely or partly on a machine, executed as a stand-alone software package partly on the machine, partly on a remote machine, or entirely on the remote machine or server.

In the context of this disclosure, a machine-readable medium may be any tangible medium that may contain or store a program for use by or in connection with an instruction execution system, apparatus, or device. The machine-readable medium may be a machine-readable signal medium or a machine-readable storage medium. A machine-readable medium may include but not limited to an electronic, magnetic, optical, electromagnetic, infrared, or semiconductor system, apparatus, or device, or any suitable combination of the foregoing. More specific examples of the machine-readable storage medium would include an electrical connection having one or more wires, a portable computer diskette, a hard disk, a random-access memory (RAM), a read-only memory (ROM), an erasable programmable read-only memory (EPROM or Flash memory), an optical fiber, a portable compact disc read-only memory (CD-ROM), an optical storage device, a magnetic storage device, or any suitable combination of the foregoing.

Further, while operations are illustrated in a particular order, this should not be understood as requiring that such operations are performed in the particular order shown or in sequential order, or that all illustrated operations are performed to achieve the desired results. In certain circumstances, multitasking and parallel processing may be advantageous. Likewise, while several specific implementation details are contained in the above discussions, these should not be construed as limitations on the scope of the subject matter described herein, but rather as descriptions of features that may be specific to particular implementations. Certain features that are described in the context of separate implementations may also be implemented in combination in a single implementation. Rather, various features described in a single implementation may also be implemented in multiple implementations separately or in any suitable sub-combination.

Although the subject matter has been described in language specific to structural features and/or methodological acts, it is to be understood that the subject matter specified in the appended claims is not necessarily limited to the specific features or acts described above. Rather, the specific features and acts described above are disclosed as example forms of implementing the claims.

From the foregoing, it will be appreciated that specific implementations of the presently disclosed technology have been described herein for purposes of illustration, but that various modifications may be made without deviating from the scope of the disclosure. Accordingly, the presently disclosed technology is not limited except as by the appended claims.

Implementations of the subject matter and the functional operations described in the present disclosure can be implemented in various systems, digital electronic circuitry, or in computer software, firmware, or hardware, including the structures disclosed in this specification and their structural equivalents, or in combinations of one or more of them. Implementations of the subject matter described in this specification can be implemented as one or more computer program products, i.e., one or more modules of computer program instructions encoded on a tangible and non-transitory computer readable medium for execution by, or to control the operation of, data processing apparatus. The computer readable medium can be a machine-readable storage device, a machine-readable storage substrate, a memory device, a composition of matter effecting a machine-readable propagated signal, or a combination of one or more of them. The term "data processing unit" or "data processing apparatus" encompasses all apparatus, devices, and machines for processing data, including by way of example a programmable processor, a computer, or multiple processors or computers. The apparatus can include, in addition to hardware, code that creates an execution environment for the computer program in question, e.g., code that constitutes processor firmware, a protocol stack, a database management system, an operating system, or a combination of one or more of them.

A computer program (also known as a program, software, software application, script, or code) can be written in any form of programming language, including compiled or interpreted languages, and it can be deployed in any form, including as a stand-alone program or as a module, component, subroutine, or other unit suitable for use in a computing environment. A computer program does not necessarily correspond to a file in a file system. A program can be stored in a portion of a file that holds other programs or data (e.g., one or more scripts stored in a markup language document), in a single file dedicated to the program in question, or in multiple coordinated files (e.g., files that store one or more modules, sub programs, or portions of code). A computer program can be deployed to be executed on one computer or on multiple computers that are located at one site or distributed across multiple sites and interconnected by a communication network.

Processors suitable for the execution of a computer program include, by way of example, both general and special purpose microprocessors, and any one or more processors of any kind of digital computer. Generally, a processor will receive instructions and data from a read only memory or a random access memory or both. The essential elements of a computer are a processor for performing instructions and one or more memory devices for storing instructions and data. Generally, a computer will also include, or be operatively coupled to receive data from or transfer data to, or both, one or more mass storage devices for storing data, e.g., magnetic, magneto optical disks, or optical disks. However, a computer need not have such devices. Computer readable media suitable for storing computer program instructions and data include all forms of nonvolatile memory, media, and memory devices, including by way of example semiconductor memory devices, e.g., EPROM, EEPROM, and flash memory devices. The processor and the memory can be supplemented by, or incorporated in, special purpose logic circuitry.

It is intended that the specification, together with the drawings, be considered exemplary only, where exemplary means an example. As used herein, the use of "or" is intended to include "and/or", unless the context clearly indicates otherwise.

While the present disclosure contains many specifics, these should not be construed as limitations on the scope of any disclosure or of what may be claimed, but rather as descriptions of features that may be specific to particular implementations of particular disclosures. Certain features that are described in the present disclosure in the context of separate implementations can also be implemented in combination in a single implementation. Conversely, various features that are described in the context of a single implementation can also be implemented in multiple implementations separately or in any suitable sub-combination. Moreover, although features may be described above as acting in certain combinations and even initially claimed as such, one or more features from a claimed combination can in some cases be excised from the combination, and the claimed combination may be directed to a sub-combination or variation of a sub-combination.

Similarly, while operations are illustrated in the drawings in a particular order, this should not be understood as requiring that such operations be performed in the particular order shown or in sequential order, or that all illustrated operations be performed, to achieve desirable results. Moreover, the separation of various system components in the implementations described in the present disclosure should not be understood as requiring such separation in all implementations. Only a few implementations and examples are described and other implementations, enhancements and variations can be made based on what is described and illustrated in the present disclosure.

**Claims**

1. A method (800) for video generation, comprises:

   converting (810) a first video into a second video, the first video comprising a first object that performs an action, and the second video comprising a second object that performs the action;
   determining (820) a video generating model based on the first video and the second video, the video generating model comprising the encoder, a diffusion model, and a decoder, and the video generating model representing an association relationship between an image, a prompt, and a video, the video comprising a plurality of images and comprising an object that performs an action, the plurality of images comprising the image, and the action being specified in the prompt, wherein determining the video generating model comprises:

      determining (822) a first feature for the first video and a second feature for the second video by the video generating model, respectively;
      determining (824) a first motion portion in the first feature for the first video based on a temporal change in the first video;
      updating (826) the second feature by aligning a second motion portion in the second feature with the first motion portion; and
      updating (828) the diffusion model based on the first feature and the updated second feature.

2. The method (800) of claim 1, wherein determining (824) the first motion portion in the first feature comprises:

   determining the temporal change in the first video based on a difference between the first feature and a mean associated with the first feature; and
   determining the first motion portion based on the temporal change and a deviation associated with the first feature.

3. The method (800) of claim 2, wherein determining (824) the first motion portion based on the temporal change and the deviation associated with the first feature comprises: determining the first motion portion by normalizing the temporal change with the deviation associated with the first feature.

4. The method (800) of claim 2, wherein the first motion portion comprises a plurality of channels, and updating the second feature by aligning the second motion portion in the second feature with the first motion portion comprises:

selecting at least one channel from the plurality of channels based on a strength of motion information related to the plurality of channels; and
updating the second motion portion in the second feature based on the at least one channel in the first motion portion.

5. The method (800) of claim 2, wherein the diffusion model comprises a plurality of temporal attention layers, the first feature comprises a first output feature at a temporal attention layer in the plurality of temporal attention layers, the second feature comprises a second output feature at the temporal attention layer, and updating the diffusion model comprises:

restoring the first output feature based on the first output feature, a mean and a deviation associated with the first output feature;
restoring the second output feature based on the second output feature, a mean and a deviation associated with the second output feature; and
updating the diffusion model based on the first and second restored output features.

6. The method (800) of claim 5, further comprising:

determining a first spatial portion indicating a cross-frame correspondence relation in the first video based on a difference between a first image in the first video and at least one subsequent image that follows the first image in the first video; and
updating the second feature by replacing a second spatial portion in the second feature with the first spatial portion.

7. The method (800) of claim 6, wherein the diffusion model further comprises a plurality of cross-frame attention layers, the plurality of temporal attention layers and the plurality of cross-frame attention layers are interlaced, and the first spatial portion is determined at a cross-frame attention layer in the plurality of cross-frame attention layers.

8. The method (800) of claim 1, wherein determining (820) the video generating model further comprises:

obtaining an encoder feature based on the encoder;
obtaining a decoder feature based on an output of the diffusion model; and
updating the decoder based on the encoder feature and the decoder feature.

9. The method (800) of claim 8, wherein the encoder comprises a plurality of encoder layers and the encoder feature comprises a plurality of encoder features corresponding to the plurality of encoder layers, the decoder comprises a plurality of decoder layers and the decoder feature comprises a plurality of decoder features corresponding to the plurality of decoder layers, and updating the decoder comprises:
updating a decoder layer in the plurality of decoder layers based on an encoder feature corresponding to the decoder layer and a decoder feature corresponding to the decoder layer.

10. The method (800) of claim 1, wherein converting (810) the first video into the second video comprises:

converting a plurality of first images that are comprised in the first video into a plurality of second images by changing appearance of the plurality of first images, respectively; and
determining the second video based on the plurality of second images.

11. The method (800) of claim 1, further comprises:

inputting a target image and a target prompt into the video generating model, the target prompt instructing the video generating model to generate a target video that comprises a target object performing a target action, and the target action being specified in the target prompt; and
receiving the target video from the video generating model.

12. An electronic device, comprising a computer processor coupled to a computer-readable memory unit, the memory unit comprising instructions that when executed by the computer processor implements a method (800) for video generation, the method comprises:

converting (810) a first video into a second video, the first video comprising a first object that performs an action, and the second video comprising a second object that performs the action;
determining (820) a video generating model based on the first video and the second video, the video generating model comprising the encoder, a diffusion model, and a decoder, and the video generating model representing an association relationship between an image, a prompt, and a video, the video comprising a plurality of images and comprising an object that performs an action, the plurality of images comprising the image, and the action being specified in the prompt, wherein determining the video generating model comprises:

determining (822) a first feature for the first video and a second feature for the second video by the video generating model, respectively;
determining (824) a first motion portion in the first feature for the first video based on a temporal change in the first video;
updating (826) the second feature by aligning a second motion portion in the second feature with the first motion portion; and
updating (828) the diffusion model based on the first feature and the updated second feature.

13. The electronic device of claim 12, wherein determining (824) the first motion portion in the first feature comprises:

determining the temporal change in the first video based on a difference between the first feature and a mean associated with the first feature; and
determining the first motion portion based on the temporal change and a deviation associated with the first feature.

14. The electronic device of claim 13, wherein determining (824) the first motion portion based on the temporal change and the deviation associated with the first feature comprises: determining the first motion portion by normalizing the temporal change with the deviation associated with the first feature.

15. A non-transitory computer program product, the computer program product comprising a non-transitory computer readable storage medium having program instructions embodied therewith, the program instructions executable by an electronic device to cause the electronic device to perform a method of any of claims 1 to 11.

**100**

110 IMAGE

120 PROMPT

A PERSON IS SHOOTING A SOCCER BALL

130

VIDEO GENERATING MODEL

140 VIDEO

*FIG. 1*

**200**

210 FIRST VIDEO

220 SECOND VIDEO

212 FIRST FEATURE

214

FIRST MOTION PORTION

222 SECOND FEATURE

224

SECOND MOTION PORTION

230 VIDEO GENERATING MODEL

232

ENCODER

234

DIFFUSION MODEL

236

DECODER

*FIG. 2*

**FIG. 3**

**FIG. 4**

**FIG. 5**

$600$

610 LATENT FRAME

$\hat{z}_0^i$

236 DECODER

630 DECODER FEATURE

632 ENCODER FEATURE

RESBLOCK

RESBLOCK

$h_l^i$

$g_l^1$

640

Q

K

V

642

$w_l^i$

WARPING BRANCH

PATCH ATTENTION BRANCH

RESBLOCK

650 OUTPUT

652 OUTPUT

RESBLOCK

$\hat{g}_l^i$

$\check{g}_l^1$

620 PIXEL FRAME

$\hat{x}_l^i$

*FIG. 6*

700A

710 INPUT

712 IMAGE    714 PROMPT

A PERSON IS SHOOTING A SOCCER BALL

716 OUTPUT

...

**FIG. 7A**

700B

720 INPUT

722 IMAGE    724 PROMPT

A PERSON IS RUNNING IN A SPRINT

726 OUTPUT

...

**FIG. 7B**

800 ⟶

CONVERT A FIRST VIDEO INTO A SECOND VIDEO, THE FIRST VIDEO COMPRISING A FIRST OBJECT THAT PERFORMS AN ACTION, AND THE SECOND VIDEO COMPRISING A SECOND OBJECT THAT PERFORMS THE ACTION

⟋ 810

DETERMINE A VIDEO GENERATING MODEL BASED ON THE FIRST VIDEO AND THE SECOND VIDEO, THE VIDEO GENERATING MODEL COMPRISING THE ENCODER, A DIFFUSION MODEL, AND A DECODER, AND THE VIDEO GENERATING MODEL REPRESENTING AN ASSOCIATION RELATIONSHIP BETWEEN AN IMAGE, A PROMPT, AND A VIDEO, THE VIDEO COMPRISING A PLURALITY OF IMAGES AND COMPRISING AN OBJECT THAT PERFORMS AN ACTION, THE PLURALITY OF IMAGES COMPRISING THE IMAGE, AND THE ACTION BEING SPECIFIED IN THE PROMPT

⟋ 820

DETERMINE A FIRST FEATURE FOR THE FIRST VIDEO AND A SECOND FEATURE FOR THE SECOND VIDEO BY THE VIDEO GENERATING MODEL, RESPECTIVELY;

⟋ 822

DETERMINE A FIRST MOTION PORTION IN THE FIRST FEATURE FOR THE FIRST VIDEO BASED ON A TEMPORAL CHANGE IN THE FIRST VIDEO

⟋ 824

UPDATE THE SECOND FEATURE BY ALIGNING A SECOND MOTION PORTION IN THE SECOND FEATURE WITH THE FIRST MOTION PORTION

⟋ 826

UPDATE THE DIFFUSION MODEL BASED ON THE FIRST FEATURE AND THE UPDATED SECOND FEATURE

⟋ 828

*FIG. 8*

900

| PROCESSING UNIT | —910 | STORAGE UNIT | —930 |

MEMORY —920

925

PROGRAMS

COMMUNICATION UNIT —940

INPUT DEVICE —950

OUTPUT DEVICE —960

## FIG. 9

**EUROPEAN SEARCH REPORT**

| Application Number |
|---|
| **EP 25 19 1547** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Haoxin Li ET AL: "Under review as a conference paper at ICLR 2025 LEARNING TO ANIMATE IMAGES FROM A FEW VIDEOS TO PORTRAY DELICATE HUMAN ACTIONS", , 15 November 2024 (2024-11-15), pages 1-21, XP093346490, Retrieved from the Internet: URL:https://openreview.net/pdf?id=3By4N0GA dt [retrieved on 2025-12-11] * page 1 - page 21 * & Anonymous: "Learning to Animate Images from A Few Videos to Portray Delicate Human Actions \| OpenReview", , 15 November 2024 (2024-11-15), pages 1-5, XP093346373, Retrieved from the Internet: URL:https://openreview.net/forum?id=3By4N0 GAdt [retrieved on 2025-12-11] * page 1 * ----- | 1-15 | INV. G11B27/031 G06T7/20 G06T13/40 G06N3/08 |

| | TECHNICAL FIELDS SEARCHED (IPC) |
|---|---|
| | G11B G06T G06N |

The present search report has been drawn up for all claims

| Place of search | Date of completion of the search | Examiner |
|---|---|---|
| The Hague | 12 December 2025 | Maetz, Arnaud |

EPO FORM 1503 03.82 (P04C01)